# EUROPÄISCHE PATENTSCHRIFT

(11) **EP 3 305 026 B1**
(45) Veröffentlichungstag und Bekanntmachung des Hinweises auf die Patenterteilung: **10.01.2024**
(21) Anmeldenummer: 16728602.0
(22) Anmeldetag: 30.05.2016
(51) Int. Cl.: H05B 45/14

(54) **LED-LICHTMODUL FÜR EINE BELEUCHTUNGSEINRICHTUNG FÜR FAHRZEUGE**
LED LIGHT MODULE FOR A LIGHTING DEVICE FOR VEHICLES
MODULE D'ÉCLAIRAGE À DEL POUR UN DISPOSITIF D'ÉCLAIRAGE POUR VÉHICULES

(30) Priorität: 01.06.2015 AT 504432015
(43) Veröffentlichungstag der Anmeldung: 11.04.2018
(73) Patentinhaber: ZKW Group GmbH, 3250 Wieselburg (AT)
(72) Erfinder: WEBER, Emanuel, 2500 Baden (AT); WACHTER, Roland, 7423 Grafenschachen (AT)
(74) Vertreter: Patentanwaltskanzlei Matschnig & Forsthuber OG
(86) Internationale Anmeldenummer: PCT/AT2016/050168
(87) Internationale Veröffentlichungsnummer: WO 2016/191782

(56) Entgegenhaltungen:
- EP-A1- 2 536 254
- WO-A1-2008/068682
- WO-A1-2008/083698
- WO-A1-2011/021932
- DE-A1-102004 045 435
- DE-A1-102007 009 104
- FR-A1- 2 939 213
- FR-A1- 2 976 151
- US-A1- 2010 134 018
- US-A1- 2010 308 739
- US-A1- 2013 200 802

## Beschreibung

Die Erfindung bezieht sich auf ein LED-Lichtmodul für eine Beleuchtungseinrichtung für Fahrzeuge das zumindest einen LED-Zweig mit zumindest einer LED aufweist, wobei an dem Modul zumindest ein Bauelement zur Identifizierung einer Bin-Klasse angeordnet ist, und das Modul für einen Betrieb mit einem Gesamtstrom eingerichtet ist.

Dem derzeitigen Stand der Technik entsprechend muss für nahezu jede Lichtfunktion von Leuchten eines Fahrzeuges eine eigene LED-Platine samt vorgeschaltetem Treiber entwickelt werden. Speziell hinsichtlich einer gewünschten Austauschbarkeit einer Lichtquelle ist dieser Zustand nicht wünschenswert. Deshalb und wegen der Zunahme von LEDs als Leuchtmittel im Automotive-Bereich ist u .a. der Wunsch nach standardisierten LEDs aufgekommen. Solche Lichtquellen sollen so spezifiziert sein, dass jede Lichtquelle austauschbar wird und auch Lichtquellen unterschiedlicher Hersteller eingesetzt werden können. Unter anderen Spezifikationskriterien muss auch die Stromaufnahme für eine gewisse Lichtstärke und Lichtfarbe genormt werden. Das der Lichtquelle vorgeschaltete Steuergerät bzw. die vorgeschaltete Treiberelektronik regelt dann auf diesen genormten Strom, unabhängig davon, welche Lichtquelle an ihrem Ausgang angeschlossen ist.

Eine besondere Herausforderung liegt dabei darin, unterschiedliche LEDs und im Speziellen LEDs mit unterschiedlichen Helligkeits-Bins einsetzen zu können. (Unter "Binning" versteht man eine Klasseneinteilung einer LED-Produktion z. B. hinsichtlich Helligkeit, Lichtstrom, Farbton etc. in "Bins") Werden LEDs mit unterschiedlichem Helligkeits-Bin mit gleichem Strom betrieben, leuchten sie mit unterschiedlichen Helligkeiten, was verständlicherweise bei einem Austausch der LEDs zu unterschiedlichen Helligkeiten führen würde, sodass ein einfacher Austausch nicht in Frage kommt. Eine standardisierte Lichtquelle muss daher eine geeignete Beschaltung aufweisen, welche dieser Tatsache, nämlich unterschiedlichen Helligkeiten bei einem Austausch, entgegenwirkt.

Darüber hinaus müssen solche standardisierten Lichtquellen die übliche Ansteuerung der LEDs erlauben. Beispielsweise sollen die Lichtquellen über PWM und auch analog über den Strom dimmbar sein. Wenn das vorgeschaltete Steuergerät einen gewissen Wert vorgibt, z. B. analoges Dimmen auf 60 %, muss auch der tatsächliche Strom durch die LED auf diesen Wert gedimmt werden.

Zur Lösung des Problems der genannten Abweichungen in der Helligkeit kann man parallel zu der Serienschaltung von zwei oder mehr LEDs einen Parallelwiderstand vorsehen, dessen Wert je nach Helligkeitsklasse gewählt wird. Eine Möglichkeit zur entsprechenden Codierung von LEDs nach Lichtstärkeklassen und einem entsprechenden Parallelschalten von Widerständen ist beispielsweise in der DE 198 14495 A1 geoffenbart. Auch wenn diese Lösung einfach ist, birgt sie den Nachteil in sich, dass sie mit großen Toleranzen verbunden ist, denn je nach Vorwärtsspannung der LEDs, welche von dem Binning sowie von der Temperatur abhängt, ergeben sich andere LED-Ströme, sodass die Helligkeit in jedem Betriebszustand unterschiedlich ist und zwischen LEDs mit unterschiedlichem Binning stark variiert. Außerdem wird in dem Parallelwiderstand unnötig elektrische Energie in Wärme umgewandelt, was vor allem bei einer größeren Anzahl von LED-Lichtquellen, insbesondere in Kraftfahrzeugen sehr nachteilig ist. Aus der WO 2015/000863 ist ein LED-Lichtmodul für eine Beleuchtungseinrichtung für Fahrzeuge bekannt, wobei das LED-Lichtmodul zumindest einen LED-Zweig mit zumindest einer LED aufweist, wobei das LED-Lichtmodul zumindest ein Bauelement zur Identifizierung einer Bin-Klasse aufweist und das LED-Lichtmodul für einen Betrieb mit einem Gesamtstrom eingerichtet ist, wobei das LED-Lichtmodul einen linearen Analogregler aufweist, der parallel zu dem zumindest einen LED-Zweig geschaltet ist, so dass sich der Gesamtstrom in einen Teilstrom des zumindest einen LED-Zweigs und einen Teilstroms eines Zweigs des Analogreglers aufzweigt.

Anstelle des in der DE 19814495A1 erwähnten Parallelwiderstandes kann man auch einen Bypasszweig mit einem Linearregler verwenden. Im Zusammenhang mit einer dimmbaren Lichtquelle ist eine vergleichbare Schaltung aus der EP 2797386 A1 bekannt geworden. Die dort aufgezeigte Problematik liegt darin, dass LEDs beim Dimmen - im Gegensatz zu Glühlampen - ihre Leuchtfarbe kaum ändern. Um jedoch denselben Effekt wie bei Glühlampen beim Dimmen von LEDs erzielen zu können, werden weiße LEDs zusammen mit gelben LEDs betrieben und über einen Bypass wird der Strom des einen LED-Typs durch Abzweigung eines Teilstroms geregelt. Auf Grund der gestellten Aufgabe hinsichtlich der Beeinflussung des Leuchtfarbengemisches zweier LED-Typen beim Dimmen bzw. der Nachahmung eines Glühlampenverhaltens ergeben sich eher komplexe Lösungen der Realisierung.

Eine Aufgabe der Erfindung liegt in der Schaffung eines LED-Lichtmoduls, das problemlos an eine im Allgemeinen geregelte Stromquelle anschließbar ist, wobei "intelligent" die entsprechende Bin-Klassifizierung automatisch berücksichtigt wird.

Diese Aufgabe wird mit einem LED-Lichtmodul der eingangs genannten Art gelöst, bei welchem erfindungsgemäß parallel zu dem einen Teilstrom des Gesamtstroms führenden LED-Zweig ein Analogregler zum Abzweigen eines Teilstroms geschaltet ist, wobei dem Analogregler als Bezugsgröße ein Signal zugeführt ist, das dem Gesamtstrom entspricht, und als Regelgröße ein Signal zugeführt ist, welches einem der Teilströme proportional ist und von dem Bauelement zur Identifizierung der Bin-Klasse geliefert wird.

In dem Modul nach der Erfindung können LEDs oder LED-Kombinationen standardisierter Art problemlos verwendet werden, wobei der Austausch von Modulen einfach möglich ist, da in "intelligenter Weise" Rücksicht auf das Binning bzw. die jeweilige Binning-Klasse genommen wird. Im Rahmen der vorliegenden Erfindung sollen unter den Begriff "LED" Leuchtdioden jeglicher Art fallen, die für den Einsatz in Leuchtmitteln für Fahrzeuge in Frage kommen, beispielsweise auch Laserdioden alleine oder in Kombination mit lichtkonvertierenden Mitteln oder Substanzen ("Phosphor").

Bei einer zweckmäßigen Variante der Erfindung ist vorgesehen, dass die Regelgröße dem durch den Analogregler abgezweigten Teilstrom proportional ist. Hierbei kann es zweckmäßig sein, wenn in dem Zweig des Analogreglers zur Identifizierung einer Bin-Klasse ein Widerstand angeordnet ist und der an diesem auftretende Spannungsabfall dem Analogregler als Regelgröße zugeführt ist.

Bei einer anderen möglichen und praktisch bewährten Ausbildung ist vorgesehen, dass die Regelgröße dem durch den LED-Zweig fließenden Teilstrom proportional ist. Hierbei kann mit Vorteil vorgesehen sein, dass in dem LED-Zweig zur Identifizierung einer Bin-Klasse ein Widerstand angeordnet ist und der an diesem auftretende Spannungsabfall dem Analogregler als Regelgröße zugeführt ist.

Die Erfindung zeigt auch den Vorteil einer gleichmäßigeren Belastung der Stromversorgung, wenn die Stromversorgung einen Steuereingang aufweist, welchem ein Steuersignal zum Dimmen/Schalten der LEDs des LED-Lichtmoduls zuführbar ist.

Die Erfindung samt weiteren Vorteilen ist im Folgenden an Hand beispielsweiser Ausführungsformen näher erläutert, die in der Zeichnung veranschaulicht sind. In dieser zeigen
Fig. 1 eine erste beispielsweise Ausführungsform LED-Lichtmoduls nach der Erfindung und
Fig. 2 eine Variante des LED-Lichtmoduls nach Fig. 1.

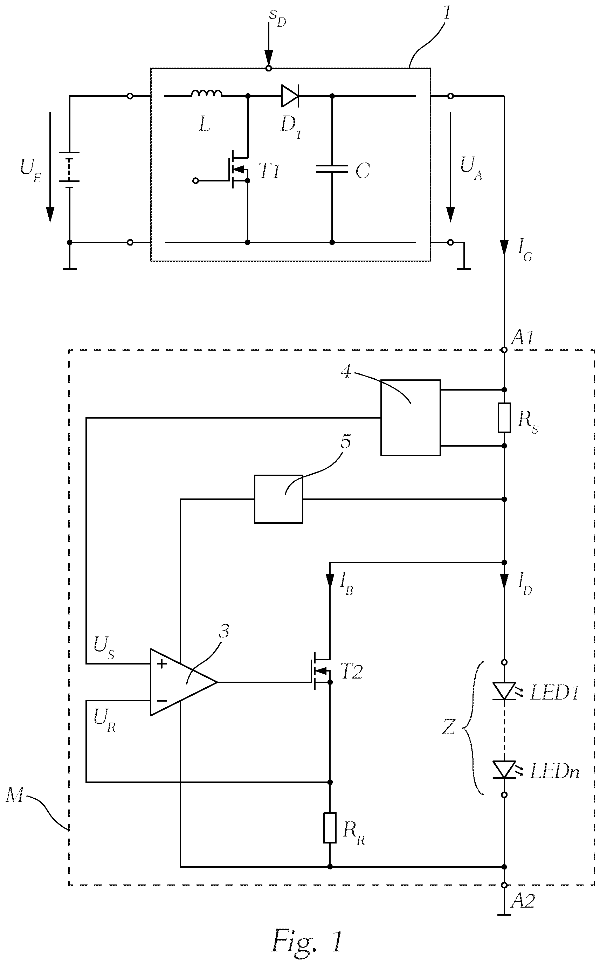

Bei der in Fig. 1 gezeigten ersten Variante eines LED-Lichtmoduls nach der Erfindung ist eine Spannungsquelle U_{E} gezeigt, bei welcher es sich beispielsweise um den Akkumulator eines Kraftfahrzeuges handelt, wobei im vorliegenden Fall dieser Spannungsquelle U_{E} ein Hochsetzsteller 1 nachgeordnet ist, in welchem nur schematisch eine Drossel L, ein Schalttransistor T1, eine Gleichrichterdiode D1 und ein Kondensator C gezeigt sind. Eine solche oder eine andere Stromversorgung ist in einem Fahrzeug vorgesehen, gehört dem Stand der Technik an und ist nicht Gegenstand der Erfindung. Die Stromversorgung liefert eine Ausgangsspannung U_{A} und versorgt ein Modul M nach der Erfindung mit einem Gesamtstrom I_{G}.

In dem Modul oder an dem Modul liegt ein Sensorwiderstand Rₛ in einem Serienzweig von Leuchtdioden LED1 ... LEDn, wobei über das Modul, wenn es in geeigneter Weise in dem Fahrzeug angeordnet und mit der Stromversorgung verbunden ist, der Gesamtstrom I_{G} von einem ersten Anschluss zu einem zweiten Anschluss fließt.

Der Serienzweig der Leuchtdioden, im Folgenden kurz LED-Zweig Z genannt, enthält eine an die Versorgungsspannung U_{A} angepasste Anzahl von Leuchtdioden, im einfachsten Fall eine einzige Leuchtdiode.

Das LED-Lichtmodul nach der Erfindung kann für einen KFZ-Scheinwerfer, eine Blinkleuchte, einen Zusatzscheinwerfer oder eine Innenbeleuchtung verwendet werden.

Gemäß der Erfindung ist nun ein gesteuerter bzw. geregelter Parallelstromkreis zu der Serienschaltung der LEDs angeordnet, der als analoger, vorzugsweise linearer Stromregler ausgebildet ist und im vorliegenden Fall einen parallel zu dem Leuchtdioden-Serienzweig liegenden Transistor T2, z. B. einen FET, aufweist, mit dem in Serie ein Regelwiderstand R_{R} liegt. Der Widerstand R_{R} ist als Bauelement zur Identifizierung der Bin-Klasse des LED-Moduls M vorgesehen und auf die auf dem Modul M bestückten LEDs LED1 ... LEDn abgestimmt.

Von dem gesamten und mit dem Sensorwiderstand Rs erfassten Strom I_{G} fließt ein Teil durch den LED-Zweig als Strom I_{D} und ein Teil über den Parallelzweig als Strom I_{B}, hier über den Transistor T2. Der Transistor wird von einem Operationsverstärker 3 angesteuert, dem folgende Größen zugeführt werden: Einerseits als Regelgröße U_{R}, eine dem abgezweigten Strom I_{B} proportionale, an dem Widerstand R_{R} auftretende Spannung U_{R} und andererseits das Ausgangssignal eines Differenzverstärkers 4, welcher eine Spannung U_{S} liefert, die dem Gesamtstrom I_{G}, der durch den Sensorwiderstand Rs fließt, welcher am Eingang des Differenzverstärkers 4 liegt, proportional ist. Der Operationsverstärker 3 kann von der Spannung versorgt werden, die an dem LED Zweig Z liegt, entweder direkt oder, wie in Fig. 1 eingezeichnet, von einem Spannungsversorgungsbaustein 5, beispielsweise einem LDO (Low-Dropout Regulator).

Die Spannung am Referenzeingang des Operationsverstärkers 3 wird durch den Gesamtstrom I_{G} definiert, der von dem vorgeschalteten Steuergerät, hier dem Aufwärtswandler 1, vorgegeben wird. Wird dieser Strom reduziert oder erhöht, so erhöht sich auch die Spannung am Referenzeingang des Operationsverstärkers 3.

Der Widerstand Rs stellt die Referenzspannung, die vom Gesamtstrom I_{G} abhängig ist, bereit. Ist nun der Strom durch den Transistor-Zweig Z und somit der Spannungsabfall an R_{R} höher als die Referenzspannung wird der Transistor mehr geschlossen, bis sich ein Gleichgewicht einstellt. Das Gegengleiche gilt für den Fall, dass der Spannungsabfall an R_{R} zu niedrig ist.

Der Widerstand R_{R} muss auf die bestückten LEDs abgestimmt sein, d.h. er dient als Bauelement zur Identifizierung der Bin-Klasse des Moduls M.

Zum besseren Verständnis sei ein Zahlenbeispiel gegeben:
Der Gesamt-Ausgangstrom I_{G} der Stromversorgung betrage 1A und der des Widerstand Rs betrage 1 Ohm. Der Spannungsabfall an Rs ist dann 1A × 1Ohm = 1V.

Falls die bestückten LEDs 1A benötigen, um die definierte Helligkeit zu erzeugen, ist die Parallelregelung nicht im Betrieb und muss folgerichtig auch gar nicht erst auf dem Lichtmodul bestückt werden.

Falls jedoch die bestückten LEDs LED1 ... LEDn nur 0,6A benötigen, d.h. 0,4A müssen im Zweig des Transistors T2 fließen, wird der Bin-klassifizierende Widerstand R_{R} mit 1/0,4 Ohm (2,5 Ohm) gewählt, denn 2,5 Ohm × 0,4A = 1V.

Der Vorteil hier ist bei dieser Variante, dass nur jene Verlustleistung anfällt, die tatsächlich "vernichtet" werden muss und keine zusätzliche Verlustleistung durch den Bin- klassifizierenden Widerstand verursacht wird.

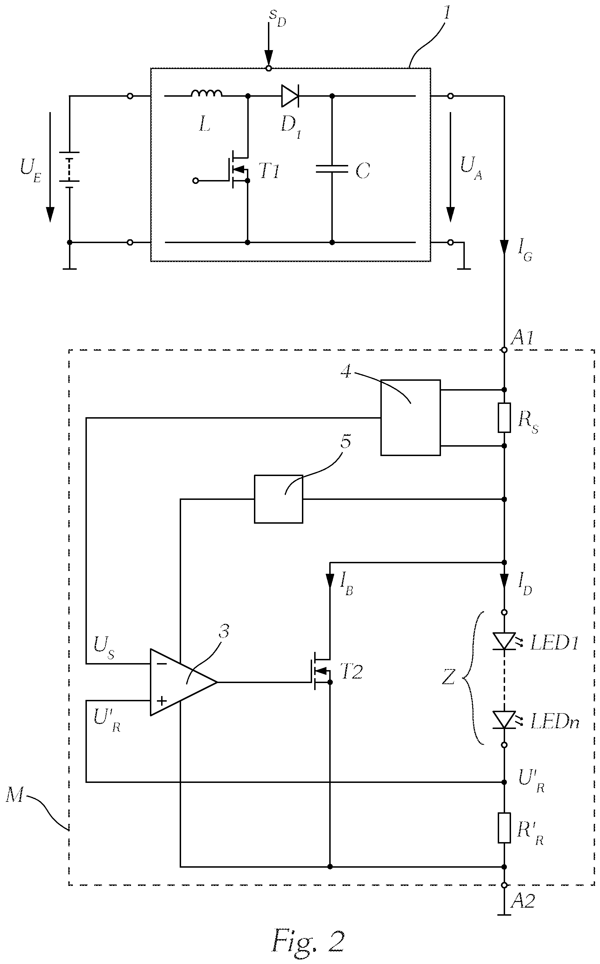

Die in **Fig. 2** dargestellte Variante der Erfindung entspricht im Wesentlichen der Anordnung nach Fig. 1, wobei für gleiche oder vergleichbare Elemente gleiche Bezugszeichen verwendet werden. Der Unterschied zur dem Modul nach Fig. 1 besteht darin, dass in diesem Fall der Widerstand R_{R'}, von dem als Regelgröße eine Spannung U_{R'} abgenommen wird, in dem Serienzweig der Leuchtdioden LED1 ... LEDn liegt. Bei dieser Ausführung ist das Bauelement zur Identifizierung der Bin-Klasse des Lichtmoduls M der Widerstand R_{R'}, der, sinngemäß wie bei der Ausführung nach Fig. 1, beispielsweise zusammen mit den Leuchtdioden LED1 ... LEDn auf einem Schaltungsträger, wie einer Platine/Leiterplatte, angeordnet sein kann, wobei das gesamte Modul in zweckmäßiger Weise zu einem leichten Austauschen gestaltet ist.

Die Funktion der Anordnung nach Fig. 2 ist die gleiche wie bei der Anordnung nach Fig. 1. Auch bei dieser Variante stellt der Widerstand Rs die Referenzspannung bereit, die vom Gesamtstrom I_{G} abhängig ist. In dieser Variante definiert der Widerstand R'_{R} die Bin-Klasse der verbauten LEDs und ist im Serienzweig der Leuchtdioden LED1 ... LEDn angeordnet.. Ist der Strom durch den LED-Zweig und somit der Spannungsabfall an R'_{R} höher als die Referenzspannung wird, der Transistor T2 mehr geöffnet, bis sich ein Gleichgewicht einstellt. Das Gegengleiche gilt für den Fall, dass der Spannungsabfall an R'_{R} zu niedrig ist.

Zum besseren Verständnis sei auch hier ein Zahlenbeispiel gegeben, wobei wieder der Gesamt-Ausgangstrom I_{G} der Stromversorgung 1A und der des Widerstand Rs 1 Ohm sei. Der Spannungsabfall an R_{S} ist dann 1A × 1Ohm = 1V.

Falls die bestückten LEDs 1A benötigen, um die definierte Helligkeit zu erzeugen, ist die Parallelregelung nicht im Betrieb und sie muss folgerichtig auch gar nicht erst auf dem Lichtmodul bestückt werden.

Falls die bestückten LEDs jedoch 0,6 A benötigen, wird der Bin-klassifizierende Widerstand R'_{R} mit 1/0,6 Ohm (1,6667Ohm) gewählt, denn 1,6667 Ohm × 0,6A = 1V.

Der Nachteil hier ist die zusätzliche Verlustleistung am Bin-Widerstand R'_{R} und die "optimierte" Variante ist dementsprechend eine Variante mit einem Bin-klassifizierenden Widerstand im Zweig des Analogreglers, bei diesen Beispielen genauer gesagt im Zweig des Transistors T2.

Es ist somit anzumerken, dass die Anordnung nach Fig. 1 in vielen Fällen zu bevorzugen ist, da bei dieser Anordnung lediglich jene Leistung in Wärme umgesetzt wird, die aufgrund der Helligkeit-Pins der LEDs abgeführt werden muss, wogegen bei der Ausführung nach Fig. 2 der Verluste erzeugende Widerstand im LED-Serienzweig sitzt und dort unter Umständen nicht wünschenswerte Verluste erzeugt, was im Einzelfall natürlich von der Leistung der LEDs bzw. dem Strom I_{D} im Serienkreis abhängt.

Für die Funktion ist es prinzipiell gleichgültig, wo der Widerstand positioniert wird. In beiden Fällen wird auf einen bestimmten LED-Strom I_{D} geregelt, bei den beschriebenen Beispielen auf 0,6 A.

Im Allgemeinen eignet sich ein Widerstand als Bin-Klassen identifizierendes Bauelement des Lichtmoduls M, doch könnte, um ein anders Beispiel zu nennen, für diesen Zweck auch eine andere stromgesteuerte Spannungsquelle verwendet werden, z.B. ein Bauelement mit einer nichtlinearer Strom/Spannungs-Kennlinie.

Weiters soll angemerkt werden, dass der Spannungs-/Stromversorgung des erfindungsgemäßen LED-Moduls M, die im vorliegenden Beispiel ein Hochsetzsteller ist, ein Steuersignal S_{D} zugeführt werden kann, welches beispielsweise zum Dimmen der Leuchtdioden dient oder ein Blinken, d.h. ein periodisches Ein- und Ausschalten verursacht etc. Dank der Erfindung ist ein Dimmen der LEDs des Moduls ebenso einfach möglich wie ein beispielsweise periodisches Ein-/Ausschalten.

## Patentansprüche

1. LED-Lichtmodul (M) für eine Beleuchtungseinrichtung für Fahrzeuge, wobei das LED-Lichtmodul (M) zumindest einen LED-Zweig mit zumindest einer LED (LED1 .... LEDn) aufweist, wobei das LED-Lichtmodul (M) zumindest ein Bauelement (R_{R}, R'_{R}) zur Identifizierung einer Bin-Klasse aufweist, wobei das zumindest eine Bauelement (R_{R}, R'_{R}) ein BIN-klassifizierter Widerstand ist, der auf die auf dem Modul bestückte zumindest eine LED abgestimmt ist, und das LED-Lichtmodul (M) für einen Betrieb mit einem Gesamtstrom (I_{G}) eingerichtet ist, welcher von einer Stromversorgung (1) an das LED-Lichtmodul (M) lieferbar ist,
das LED-Lichtmodul (M) einen linearen Analogregler (3, T2) aufweist, der parallel zu dem LED-Zweig (Z) geschaltet ist, sodass sich der Gesamtstrom (I_{G}) in einen Teilstrom (I_{D}) des LED-Zweigs (Z) und einen Teilstroms (I_{B}) des Analogreglers (3, T2) aufzweigt, wobei dem Analogregler (3, T2) als Bezugsgröße ein Signal (Us) zugeführt ist,
und zum Einstellen des abzuzweigenden Teilstromes (I_{B}) und damit zur Regelung des Teilstromes (I_{D}) des LED-Zweigs (Z) als Regelgröße ein Signal (U_{R}) zugeführt ist, welches einem der Teilströme (I_{B}, I_{D}) proportional ist und von dem Bauelement (R_{R}, R'_{R}) geliefert wird,
**dadurch gekennzeichnet, dass**
das als Bezugsgröße zugeführte Signal (Uₛ) dem Gesamtstrom (I_{G}) entspricht.

2. LED-Lichtmodul (M) nach Anspruch 1, **dadurch gekennzeichnet, dass** die Regelgrö-ße dem durch den Analogregler (3, T2) abgezweigten Teilstrom (I_{B}) proportional ist.

3. LED-Lichtmodul (M) nach Anspruch 2, **dadurch gekennzeichnet, dass** in dem Zweig des Analogreglers (3, T2) das Bauelement (R_{R}) angeordnet ist und der an diesem auftretende Spannungsabfall (U_{R}) dem Analogregler als Regelgröße zugeführt ist.

4. LED-Lichtmodul (M) nach Anspruch 1, **dadurch gekennzeichnet, dass** die Regelgrö-ße dem durch den LED-Zweig (Z) fließenden Teilstrom (I_{D}) proportional ist.

5. LED-Lichtmodul (M) nach Anspruch 4, **dadurch gekennzeichnet, dass** in dem LED-Zweig (Z) das Bauelement (R'_{R}) angeordnet ist und der an diesem auftretende Spannungsabfall (U'_{R}) dem Analogregler (3, T2) als Regelgröße zugeführt ist.

## Claims

1. LED light module (M) for a lighting device for vehicles, the LED light module (M) having at least one LED branch with at least one LED (LED1 .... LEDn), the LED light module (M) having at least one component (R_{R}, R'_{R}) for identifying a bin class, the at least one component (R_{R}, R'_{R}) being a BIN-classified resistor which is matched to the at least one LED fitted on the module, and the LED light module (M) being set up for operation with a total current (I_{G}) which can be supplied to the LED light module (M) from a power supply (1),
the LED light module (M) has a linear analog controller (3, T2) which is connected in parallel with the LED branch (Z), so that the total current (I_{G}) is divided into a partial current (I_{D}) of the LED branch (Z) and a partial current (I_{B}) of the analog controller (3, T2), the analog controller (3, T2) is supplied with a signal (Us) as a reference variable, and a signal (U_{R}) which is proportional to one of the partial currents (I_{B}, I_{D}) and is supplied by the component (R_{R}, R'_{R}) is supplied as a controlled variable for adjusting the partial current (I_{B}) to be branched off and thus for regulating the partial current (I_{D}) of the LED branch (Z),
**characterized in that**
the signal (Us) supplied as a reference variable corresponds to the total current (I_{G}).

2. LED light module (M) according to claim 1, **characterized in that** the controlled variable is proportional to the partial current (I_{B}) branched off by the analog controller (3, T2).

3. LED light module (M) according to claim 2, **characterized in that** the component (R_{R}) is arranged in the branch of the analog controller (3, T2) and the voltage drop (U_{R}) occurring at this component is fed to the analog controller as a controlled variable.

4. LED light module (M) according to claim 1, **characterized in that** the controlled variable is proportional to the partial current (I_{D}) flowing through the LED branch (Z).

5. LED light module (M) according to claim 4, **characterized in that** the component (R'_{R}) is arranged in the LED branch (Z) and the voltage drop (U'_{R}) occurring at this component is fed to the analogue controller (3, T2) as a controlled variable.

## Revendications

1. Module d'éclairage à LED (M) pour un dispositif d'éclairage pour véhicules, le module d'éclairage à LED (M) comprenant au moins une branche de LED avec au moins une LED (LED1 .... LEDn), le module d'éclairage à LED (M) présentant au moins un composant (R_{R}, R'_{R}) pour l'identification d'une classe Bin, le au moins un composant (R_{R}, R'_{R}) étant une résistance classée BIN qui est adaptée à la au moins une LED équipée sur le module, et le module d'éclairage à LED (M) étant conçu pour un fonctionnement avec un courant total (I_{G}) qui peut être fourni par une alimentation électrique (1) au module d'éclairage à LED (M),
le module d'éclairage à LED (M) présente un régulateur analogique linéaire (3, T2) qui est monté en parallèle avec la branche de LED (Z), de sorte que le courant total (I_{G}) se divise en un courant partiel (I_{D}) de la branche de LED (Z) et un courant partiel (I_{B}) du régulateur analogique (3, T2), le régulateur analogique (3, T2) pouvant être commandé par un signal de commande, un signal (Us) est amené comme grandeur de référence, et pour régler le courant partiel (I_{B}) à dériver et ainsi pour réguler le courant partiel (I_{D}) de la branche LED (Z), un signal (U_{R}) est amené comme grandeur de régulation, lequel est proportionnel à l'un des courants partiels (I_{B}, I_{D}) et est fourni par le composant (R_{R}, R'_{R}),
**caractérisé en ce que**
le signal (Us) fourni comme grandeur de référence correspond au courant total (I_{G}).

2. Module d'éclairage à LED (M) selon la revendication 1, **caractérisé en ce que** la grandeur de régulation est proportionnelle au courant partiel (I_{B}) dérivé par le régulateur analogique (3, T2).

3. Module d'éclairage à LED (M) selon la revendication 2, **caractérisé en ce que** le composant (R_{R}) est disposé dans la branche du régulateur analogique (3, T2) et que la chute de tension (U_{R}) apparaissant aux bornes de ce composant est amenée au régulateur analogique en tant que grandeur de régulation.

4. Module d'éclairage à LED (M) selon la revendication 1, **caractérisé en ce que** la grandeur de régulation est proportionnelle au courant partiel (I_{D}) circulant dans la branche LED (Z).

5. Module d'éclairage à LED (M) selon la revendication 4, **caractérisé en ce que** le composant (R'_{R}) est disposé dans la branche de LED (Z) et la chute de tension (U'_{R}) apparaissant sur celui-ci est amenée au régulateur analogique (3, T2) comme grandeur de régulation.
